(19) **Europäisches Patentamt European Patent Office Office européen des brevets**

(11) **EP 4 570 777 A1**

(12) **EUROPEAN PATENT APPLICATION**

(43) Date of publication:
**18.06.2025 Bulletin 2025/25**

(21) Application number: **24209683.2**

(22) Date of filing: **30.10.2024**

(51) International Patent Classification (IPC):
*C04B 35/66* (2006.01)    *C04B 38/02* (2006.01)
*C04B 38/10* (2006.01)    *C04B 28/24* (2006.01)
*B01J 13/00* (2006.01)

(52) Cooperative Patent Classification (CPC):
(C-Sets available)
**C04B 28/24; C04B 33/22; C04B 35/101;
C04B 35/1015; C04B 35/103; C04B 35/106;
C04B 35/14; C04B 35/18; C04B 35/185;
C04B 35/481; C04B 35/482; C04B 35/6316;
C04B 35/66; C04B 38/02; C04B 38/10;** (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.12.2023 US 202318535372**

(71) Applicant: **MAGNECO/METREL, INC.
Deerfield, IL 60015 (US)**

(72) Inventor: **PAUTLER, Dominic
Tianjin, 300061 (CN)**

(74) Representative: **WSL Patentanwälte
Partnerschaft mbB
Kaiser-Friedrich-Ring 98
65185 Wiesbaden (DE)**

(54) **METHOD OF MAKING LIGHTWEIGHT REFRACTORY COMPOSITION AND ARTICLES USING FOAMED COLLOIDAL SILICA BINDER**

(57)    A foamed colloidal silica binder having a total porosity of about 50% to about 95% by volume can be used to make porous refractory compositions and refractory articles having a porosity of about 25% to about 75% by volume. The foamed colloidal silica binder endures mixing with refractory ingredients to form the porous refractory composition, casting the refractory composition into a refractory shape, and drying the shape to form to refractory article, without significant collapsing of the foam. The resulting lightweight refractory articles are useful in a wide variety of insulating and weight-reducing applications.

(52) Cooperative Patent Classification (CPC): (Cont.)
C04B 2111/00146; C04B 2111/00431;
C04B 2111/40; C04B 2235/3217; C04B 2235/3244;
C04B 2235/3418; C04B 2235/3427;
C04B 2235/3463; C04B 2235/5427;
C04B 2235/5436; C04B 2235/77; C04B 2235/96

C-Sets
**C04B 28/24, C04B 14/06, C04B 14/18,
C04B 14/22, C04B 14/30, C04B 14/041,
C04B 14/062, C04B 14/066, C04B 14/303,
C04B 14/306, C04B 18/025, C04B 22/06,
C04B 22/106, C04B 24/16, C04B 24/129,
C04B 38/02, C04B 40/0028, C04B 40/0042,
C04B 40/065;
C04B 28/24, C04B 14/06, C04B 14/18,
C04B 14/22, C04B 14/30, C04B 14/041,
C04B 14/062, C04B 14/066, C04B 14/303,
C04B 14/306, C04B 18/025, C04B 22/06,
C04B 22/106, C04B 24/16, C04B 24/129,
C04B 38/10, C04B 40/0028, C04B 40/0042,
C04B 40/065;
C04B 28/24, C04B 22/06, C04B 22/106,
C04B 24/16, C04B 24/129;
C04B 38/10, C04B 28/24, C04B 38/02,
C04B 38/0061, C04B 38/0067, C04B 38/0074;
C04B 38/10, C04B 33/22, C04B 35/14,
C04B 35/18, C04B 35/66, C04B 35/101,
C04B 35/103, C04B 35/106, C04B 35/185,
C04B 35/481, C04B 35/482, C04B 35/1015,
C04B 38/02, C04B 38/0061, C04B 38/0067,
C04B 38/0074**

**Description**

**FIELD OF THE INVENTION**

This invention is directed to a foamed colloidal silica binder that can be used to make a lightweight refractory casting composition. The invention also includes refractory compositions and products made using the foamed colloidal silica binder, and corresponding methods of making the foamed colloidal silica binder and the lightweight refractory casting compositions.

**BACKGROUND OF THE INVENTION**

Colloidal silica binders have been used by Magneco/Metrel, Inc. for many years to make highly effective refractory casting compositions that can be transported using a concrete pump. These refractory compositions pass through various stages of manufacture and processing, including manufacturing a colloidal silica binder with suitable amounts of colloidal silica and water, mixing the colloidal silica binder with dry refractory ingredients to form the pumpable refractory casting composition, transporting the refractory casting composition to a mold or other destination, and drying and curing the refractory casting composition to form a hardened refractory part or liner. The finished refractory part or liner is then able to withstand various stresses associated with its use environment. Depending on the end use, these stresses may include elevated temperatures associated with molten iron and steel, exposure to acids and other chemicals at elevated temperatures, heavy loads, and extended use periods. Throughout these stages, the refractory compositions made with the colloidal silica binder have been able to withstand these manufacturing and use stresses.

Non-limiting examples of commercially successful refractory compositions made using a colloidal silica binder, and associated methods and refractory articles, are described in U.S. Patents 9,994,486 to Anderson et al., U.S. Patent 10,429,130 to Boring et al., and U.S. Patent 10,494,305 to Anderson et al. These refractory compositions are designed for use in environments that require resistance to shock and creep at elevated temperatures encountered in the iron and steel industry. Refractory articles made from these compositions have high densities, low porosities, and have use lives of many years in these environments.

**SUMMARY OF THE INVENTION**

The present invention is directed to a foamed colloidal silica binder that can be used to make lightweight, high porosity refractory compositions that are suitable for making refractory insulating materials and other lightweight refractory products. The invention is also directed to porous refractory compositions made using the foamed colloidal silica binder, porous refractory articles made from the porous refractory compositions, and corresponding methods of making the foamed colloidal silica binder, the porous refractory casting compositions, and the porous refractory articles.

The foamed colloidal silica binder can include about 20% to about 70% by weight colloidal silica particles, about 30% to about 80% by weight water, and a synthetic, non-protein foaming agent present in a weight ratio to the water of about 1:25 to about 1: 1500. The porous refractory composition and porous refractory articles can include from about 3% to about 35% by weight of the foamed colloidal silica binder and about 65% to about 97% by weight of a solid refractory component exclusive of the foamed colloidal silica binder. The solid refractory component can be any one or combination of refractory ingredients that would find use in a porous refractory article having comparatively high levels of porosity, low bulk density, and good strength and insulative properties.

The foamed colloidal silica binder is designed to withstand compression and collapse of the foam through various manufacturing and use stages, including a) prior to mixing with the dry ingredients, b) during mixing with the dry ingredients, c) during casting into a refractory shape or product, and d) during drying and setting of the refractory shape or product. Put another way, the foamed colloidal silica binder is designed so that the foam does not significantly collapse during these stages. Various properties have been investigated to identify one or more parameters that explain how the foamed colloidal silica binder can withstand these manufacturing and use stages without significantly collapsing. Such an explanation has proven evasive. For example, it is surprising and unexpected, and difficult to explain, how a foamed colloidal silica binder having an initial porosity of about 50% to about 90% can be used as a minor component (e.g., about 3% to about 35% by weight) of a refractory composition) to yield a porous refractory article having high levels of porosity that can exceed 40% or even exceed 50%, especially in light of the stress that the foamed mixture endures during processing.

The foamed colloidal silica binder can have a porosity, which is the air content before any mixing with the dry refractory ingredients or casting, of about 50% to about 95% percent by volume, determined using a specific gravity cup and test procedure described below. Depending on the size of the foamed colloidal silica cells, the foamed colloidal silica can significantly impact the overall porosity of the resulting casing composition and refractory article, even though the foamed colloidal silica binder may constitute a relatively minor weight percentage of the overall porous refractory composition. Without being bound by theory, this may be because the cells in the foamed colloidal silica binder can be large enough to cause increased spacing between the remaining refractory particles in the composition when the ingredients are mixed together.

The foamed colloidal silica binder can have a ratio of closed porosity to total porosity of at least about 70% and up to about 100% measured using microscopy, such as by visual observation of scanning electron microscopy ("SEM") photographs. A high ratio of closed porosity to total porosity is favorable because closed cells are less likely to collapse during mixing of the foamed colloidal silica binder with the solid refractory component, and subsequent processing of the refractory composition.

The foamed colloidal silica binder can have a bulk density of about 0.065 to about 0.65 grams/cm$^3$ measured using a specific gravity cup and test procedure described below. The foamed colloidal silica binder can have a total pore volume of about 0.75 to about 15.0 cm$^3$/gram. In order to enable the foamed colloidal silica binder to maintain its integrity during mixing and processing, the foamed colloidal silica binder should have a half-life of at least about one hour.

The foamed colloidal silica binder can then be mixed with a solid refractory component composed of solid (dry) refractory ingredients, suitably in an amount of about 3% to about 50% by weight foamed colloidal silica binder and about 50% to about 97% by weight of the solid refractory component, to form the damp porous refractory composition. The resulting damp porous refractory composition (prior to pumping or other further processing) can have a porosity (air content) before any pumping or further processing of about 25% to about 75%, determined using ASTM C 796-97, which is incorporated herein by reference. As explained above, the foamed colloidal silica binder can have an outsized impact on the porosity of the damp refractory composition.

The damp porous refractory composition can then be pumped or cast into a refractory shape or product, which can then be dried and hardened to form a refractory part or liner. The removal of water results in the colloidal silica binder occupying a somewhat lower weight percentage of the refractory part or liner, compared to the damp porous refractory composition. The resulting refractory part or liner can include about 1.5% to about 30% by weight of the colloidal silica binder, less the water, and about 70% to about 98.5% by weight of the solid refractory component. The refractory part or liner can have a porosity (percent air) of about 25% to about 75%, measured using ASTM C 830-00. ASTM C830-00, which is entitled "Standard Test Methods for Apparent Porosity, Liquid Absorption, Apparent Specific Gravity, and Bulk Density of Refractory Shapes by Vacuum Pressure," is incorporated herein by reference.

Key to the invention is the discovery of a narrow group of foaming agents that can be used to produce a foamed colloidal silica binder having enough integrity to satisfy the foregoing properties. Most foaming agents have not been successful in making foamed colloidal silica having durable foaming properties and containing about 20% to about 70% by weight colloidal silica particles in water. While many foaming agents are suitable for foaming pure water, the inclusion of colloidal silica particles in the stated amounts has not resulted in foamed colloidal silica having sufficient durability to withstand collapse a) prior to mixing with the solid component, b) during mixing with the solid component, c) during casting into a refractory shape or product, and/or d) during drying and setting of the refractory shape or product. Significant collapsing of the foamed colloidal silica during any of a) to d) results in refractory parts and liners that do not have high enough porosity to reach the targeted range. While the compositional limits of the successful foaming agents have been difficult to characterize, it is presently believed that the most effective foaming agents can be synthetic surfactant-based foaming agents that are devoid of proteins. Even within these parameters, successful foaming agents are not uniformly guaranteed but can be identified by their properties, determined using the foregoing test procedures.

In one embodiment, the invention enables the manufacture of refractory insulating materials and other highly porous refractory items without incurring significant bulk shipping costs that are often associated with the transport of highly porous refractory compositions and articles. In one embodiment, an aqueous colloidal silica binder, a synthetic, non-protein containing foaming agent, and a solid component composed of dry refractory ingredients can be shipped to a jobsite in three separate containers, or in discrete parts of the same container as a three-part system. After arriving at the jobsite, the aqueous colloidal silica can be mixed with the foaming agent to produce the foamed colloidal silica binder. The foamed colloidal silica can then be mixed with the solid component to produce a foamed refractory composition. The foamed refractory composition can then be pumped or otherwise cast into a mold or other substrate to produce a refractory shape having high porosity within the above targets. The refractory shape can then be dried and set to produce a finished refractory part or liner having high porosity. This technique avoids the higher shipping costs that might otherwise result if the higher volume porous refractory composition or the finished porous refractory article were made prior to shipping, thereby entailing shipping of the entrained air.

With the foregoing in mind, it is a feature and advantage of the invention to provide a foamed colloidal silica binder having the following ingredients and properties:

about 20% to about 70% by weight colloidal silica particles;
about 30% to about 80% by weight water; and
a synthetic surfactant-based non-protein surfactant-based foaming agent present in a weight ratio to the water of about 1:25 to about 1: 1500;

wherein the foamed colloidal silica binder has a total porosity of about 50% to about 95% by volume and a total pore volume of about 0.75 to about 15.0 cm$^3$/gram.

It is also a feature and advantage of the invention to provide a porous refractory composition made using the foamed colloidal silica binder, and having the following ingredients and properties:

about 3% to about 50% by weight of a foamed colloidal silica binder; and
about 50% to about 97% by weight of a solid refractory component exclusive of the foamed colloidal silica binder;
wherein the foamed colloidal silica binder includes about 20% to about 70% by weight colloidal silica particles, about 30% to about 80% by weight water, and a synthetic, surfactant-based non-protein foaming agent present in a weight ratio to the water of about 1:25 to about 1: 1500;
wherein the foamed colloidal silica binder has a total porosity of about 50% to about 95% by volume and a total pore volume of about 0.75 to about 15.0 cm$^3$/gram.

It is also a feature and advantage of the invention to provide a porous refractory article made using the porous refractory composition, and having the following composition based on dry weight, and properties:

about 1.5% to about 30% by weight of a dried foamed colloidal silica binder; and
about 70% to about 98.5% by weight a solid refractory component exclusive of the dried foamed colloidal silica binder;
wherein the foamed colloidal silica binder includes colloidal silica particles and a synthetic surfactant-based non-protein foaming agent; and
the porous refractory article has a total porosity of about 25% to about 75% by volume.

It is also a feature and advantage of the invention to provide a method of making a foamed colloidal silica binder, including the following steps:

adding a synthetic surfactant-based non-protein foaming agent to water in a weight ratio of foaming agent to water of about 1:25 to about 1: 1500;
adding colloidal silica particles to the water in an amount of about 20% to about 70% colloidal silica particles and about 30% to about 80% by weight water; and
mixing the synthetic surfactant-based non-protein foaming agent, colloidal silica particles and water together to form the foamed colloidal silica binder;
wherein the foamed colloidal silica binder has a total porosity of about 50% to about 95% by volume and a total pore volume of about 0.75 to about 15.0 cm$^3$/gram.

It is also a feature and advantage of the invention to provide a method of making a porous refractory composition, including the following steps:

providing a foamed colloidal silica binder having a total porosity of about 50% to about 95% by volume and about 0.75 to about 15.0 cm$^3$/gram;
providing a solid refractory component exclusive of the foamed colloidal silica binder; and
mixing about 3% to about 50% by weight of the foamed colloidal silica binder with about 50% to about 97% by weight of the solid refractory component to form the porous refractory composition;
wherein the foamed colloidal silica binder includes about 20% to about 70% by weight colloidal silica particles, about 30% to about 80% by weight water, and a synthetic surfactant-based non-protein foaming agent present in a weight ratio to the water of about 1:25 to about 1:1500.

It is also a feature and advantage of the invention to provide a method of making a porous refractory article, including the following steps:

providing a porous refractory composition including about 3% to about 35% by weight of a foamed colloidal silica binder and about 65% to about 97% by weight a solid refractory component exclusive of the foamed colloidal silica binder;
casting the porous refractory composition to a mold or substrate; and
drying the porous refractory composition to form the porous refractory article;
wherein the foamed colloidal silica binder includes colloidal silica particles and a synthetic surfactant-based non-protein foaming agent and a total porosity of about 50% to about 95% by volume and a total pore volume of about 0.75 to about 15.0 cm$^3$/gram; and

the porous refractory article has a total porosity of about 25% to about 75% by volume.

These and other features and advantages of the invention will become further apparent from the following detailed description of the invention, read in conjunction with the drawings.

## BRIEF DESCRIPTION OF THE DRAWINGS

Fig. 1 illustrates a disassembled laboratory screen mixer than can be used to make the foamed colloidal silica, and the porous refractory composition of the invention.

Fig. 2 illustrates the laboratory screen mixer of Fig. 1, fully assembled, and used to mix a synthetic, non-protein foaming agent with water at a weight ratio of 1:30 using a two-speed drill.

Fig. 3 illustrates the screen mixing device and the mixture of Fig. 2, after 1 minute of mixing at high speed.

Fig. 4 illustrates the 1:30 mixture of synthetic, non-protein foaming agent and water turned upside down. The compressive strength and tensile strength of the foamed mixture are high enough that the foam does not significantly deform or pour out of the jar.

Fig. 5 illustrates a photomicrograph of the 1:30 mixture of non-protein foaming agent and water under 50X magnification.

Fig. 6 illustrates a mixing jar containing 15 grams of an aqueous colloidal silica binder and 200 grams of a solid refractory component before mixing and without any foaming agent.

Fig. 7 illustrates the refractory composition that resulted after mixing the combined ingredients shown in Fig. 6 for 1 minute using the screen mixer.

Fig. 8 illustrates a porous refractory composition that resulted after mixing the refractory composition of Fig. 7 with 20% by weight of the 1:30 mixture of synthetic, non-protein foaming agent and water shown in Figs. 3 and 4.

Fig. 9 illustrates the effect on sample porosity and density of five cup-shaped refractory articles formed using varying amounts (ranging from zero to 8 grams) of the 1:30 mixture of synthetic, non-protein foaming agent and water, in a refractory composition that contains 37.5 grams of a colloidal silica binder and 250 grams of a solid refractory component.

Fig. 10 illustrates a mold used to make puck-shaped refractory articles.

Fig. 11 illustrates a foamed colloidal silica binder formed by mixing a non-protein foaming agent with an aqueous colloidal silica binder at a 1:100 weight ratio.

Fig. 12 illustrates a mixing jar containing the foamed colloidal silica binder of Fig. 11 turned upside down, whereupon the foamed colloidal silica binder does not collapse or pour from the jar.

Fig. 13 illustrates a porous refractory composition containing 20% by weight of the foamed colloidal silica binder of Fig. 12 and 80% by weight of a solid refractory component being poured into the puck-shaped mold of Fig. 10.

Fig. 14 illustrates the porous refractory composition of Fig. 13 filling the puck-shaped mold, after light vibration to level the cast refractory composition surface.

Fig. 15 illustrates a puck-shaped porous refractory article formed by drying and setting the porous refractory composition overnight in the mold.

Fig. 16 illustrates the puck-shaped refractory article of Fig. 15 after it has been removed from the mold and its center core removed.

## DETAILED DESCRIPTION OF THE INVENTION

### A. Foamed Colloidal Silica Binder and Method of Making It

In one embodiment, the invention is directed to a foamed colloidal silica binder for a refractory composition. The foamed colloidal silica binder can include about 20% to about 70% colloidal silica particles, or about 30% to about 60% by weight colloidal silica particles, or about 40% to about 50% by weight colloidal silica particles. The foamed colloidal silica binder can include about 30% to about 80% by weight water, or about 40% to about 70% by weight water, or about 50% to about 60% by weight water. The foamed colloidal silica binder can include a synthetic, non-protein foaming agent in a weight ratio to the water of about 1:25 to about 1: 1500, or about 1:50 to about 1:750, or about 1:50 to about 1:200. The colloidal silica particles can have a median particle size of about 1 to about 100 nanometers, or about 5 to about 90 nanometers, or about 10 to about 80 nanometers, or about 15 to about 75 nanometers. The synthetic, non-protein foaming agent can be free of proteins, can contain at least one synthetic chemical surfactant and, in one embodiment, can be free of all natural ingredients. The synthetic, non-protein foaming agent can be formed using one or more chemicals that act as surfactants to reduce the surface tension of the liquid water.

Synthetic non-protein foaming agents include without limitation those derived from sodium and potassium bicarbonates, decarbonates containing the divalent [-O-O-O-] or - $C_2O_5$- functional group, azodicarbonamides, dodecyl benzenesulfonic acid, sodium dodecylbenzene sulfonate, sodium laureth sulfonate, disodium laureth sulfosuccinate, magnesium laureth sulfate, alkyl ether sulfates, titanium hydride, and mixtures thereof. The synthetic non-protein foaming agent can be nonionic, anionic, or cationic. One exemplary synthetic non-protein foaming agent is "Cement Building Foam Agent 1281" manufactured by Tianjin Hero-Land S&T Development Co., Ltd. of Tianjin, China. This foaming agent has the appearance of a white paste, is chemically and physically stable, and is reported as having a pH of 6-8, a foam quality (Fg%) of greater than or equal to 80, and a half-life of greater than or equal to 30 minutes measured using the test procedure below and is completely soluble in water.

In one embodiment, the foamed colloidal silica binder can be prepared by first mixing the colloidal silica particles with the water to form a colloidal silica dispersion. Then, the synthetic, non-protein foaming agent can be mixed with the colloidal silica dispersion to form the foamed colloidal silica binder. In another embodiment, the foamed colloidal silica binder can be prepared by first mixing the synthetic, non-protein foaming agent with the water to form an aqueous foamed composition. Then, the colloidal silica particles or a conventional (non-foamed) colloidal silica binder can be mixed with the aqueous foamed composition to form the foamed colloidal silica binder. In another embodiment, the colloidal silica particles and the synthetic, non-protein foaming agent can be simultaneously mixed with the water to form the foamed colloidal silica binder. In another embodiment, a) a precursor foamed colloidal silica composition (containing colloidal silica, water and foam) can be mixed with b) a standard colloidal silica binder (containing colloidal silica and water) to form the final foamed colloidal silica binder added to the solid component of the refractory composition, or a) and b) can be added separately to the solid component of the refractory composition.

The mixing of the ingredients can be accomplished using any suitable stirring or agitating technique. The foaming may occur either during or after the mixing of the ingredients using any suitable foaming apparatus. Suitable foaming apparatus include without limitation a screen mixer equipped with a mixing agitator, whereupon the foam is generated by passing the mixture through the screen. Another suitable foaming apparatus is a Hobart mixer. The mixing and foaming can be made to occur simultaneously by using the foaming apparatus as a primary mixer of the ingredients.

The type and amount of synthetic, non-protein foaming agent can be selected, along with the type and amount of colloidal silica and the amount of water, and the mixing and foaming conditions, to provide the foamed colloidal silica binder having desired properties. The foamed colloidal silica binder can have a total porosity, which is the air content before any mixing with the dry refractory ingredients or casting, of at least about 50% by volume, or at least about 60% by volume, or at least about 70% by volume, or at least about 75% by volume, and up to about 95% by volume, or up to about 90% by volume, or up to about 85% by volume, or up to about 80% by volume. If the total porosity is too low, then even the strongest and most durable foamed colloidal silica binder will not contribute sufficiently to the porosity of the resulting porous refractory composition or porous refractory articles. If the total porosity is too high, then the integrity of the foam can be compromised.

The foamed colloidal silica binder can also have a favorable ratio of closed porosity to total porosity. The term "closed porosity" reflects the percentage of total porosity that is provided by closed foam cells. In one embodiment, the ratio of closed porosity to total porosity can be at least about 70%, or at least about 80%, or at least about 85%, or at least about 90%, and can be up to about 100%, or up to about 98%, or up to about 95%. If the ratio of closed porosity to total porosity is too low, then the integrity of the foam can be compromised. The ratio of closed porosity to total porosity can be qualitatively determined using microscopy, such as by generating SEM images of the foamed colloidal silica binder and visually examining the SEM images. The foamed colloidal silica binder can have a half-life of grater that about 1 hours, or greater than about 1.2 hours, or greater than about 1.4 hours, measured using the test procedure below. There is no upper limit for the half-life because a longer half-life is advantageous. The long half-life reflects the durability of the foamed colloidal silica binder and its ability to withstand the subsequent processing steps without significant collapse. In practice, the half-life of the foamed colloidal silica binder can be up to about 72 hours, or up to about 48 hours, or up to about 24 hours.

The foamed colloidal silica binder can have a bulk density of about 0.065 to about 0.65 grams/cm$^3$ measured using a specific gravity cup and test procedure described below. The bulk density can be at least about 0.065 grams/cm$^3$, or at least about 0.130 grams/cm$^3$, or at least about 0.195 grams/cm$^3$, or at least about 0.260 grams/cm$^3$, and/or up to about 0.65 grams/cm$^3$, or up to about 0.52 grams/cm$^3$, or up to about 0.39 grams/cm$^3$, or up to about 0.32 grams/cm$^3$. The foamed colloidal silica binder can have a total pore volume of about 0.75 to about 15.0 cm$^3$/gram. The total pore volume can be at least about 0.75 cm$^3$/gram, or at least about 1.15 cm$^3$/gram, or at least about 1.80 cm$^3$/gram, or at least about 2.30 cm$^3$/gram, and/or up to about 15.0 cm$^3$/gram, or up to about 7.0 cm$^3$/gram, or up to about 4.5 cm$^3$/gram, or up to about 3.0 cm$^3$/gram, measured using the test procedures below.

**B. Porous Refractory Composition and Method of Making It**

In another embodiment, the invention is directed to a porous refractory composition. The porous refractory composition can include about 3% to about 50% by weight of a foamed colloidal silica binder as described in the foregoing embodiments and about 50% to about 97% by weight of a solid refractory component exclusive of the foamed colloidal silica binder. Whereas the foamed colloidal silica binder independently has a total porosity of about 50% to about 95% by volume, the porous refractory composition can exhibit different ranges of these properties reflecting the minority percentage of the foamed colloidal silica binder in the refractory composition, and its outsized influence in the overall porosity.

The porous refractory composition can have a total porosity of at least about 25% by volume, or at least about 35% by volume, or at least about 40% by volume, or at least about 45% by volume, or at least about 50% by volume, and up to about 75% by volume, or up to about 70% by volume, or up to about 65% by volume, or up to about 60% by volume, measured using ASTM C 796-97. Most or all of the total porosity in the porous refractory composition can be contributed by the foamed colloidal silica binder which, as explained above, can have a high ratio of closed porosity to total porosity. For point of reference, these properties can reflect the state of the porous casting composition after the dry refractory ingredients have been thoroughly mixed with the foamed colloidal silica binder to form the damp porous refractory composition, and before the damp porous refractory composition has been cast into a mold or shape and dried.

The solid refractory component of the porous refractory composition (excluding the foamed colloidal silica binder) can include a variety of solid refractory ingredients. The foamed colloidal silica binder can be used to formulate refractory compositions having resistance to elevated temperatures and chemical exposure, in addition to being light weight and porous with insulation properties and minimal materials cost. In one embodiment, the porous refractory composition can be a pumpable composition that can be cast into a mold or liner form using a concrete pump.

### i. Solid refractory components based on chamotte with mullite

In some embodiments, the solid refractory component of the porous casting composition can include a mixture of chamotte and mullite, and optional fused silica and/or calcined alumina. For example, the solid refractory component of the porous refractory composition can include, by weight of the solid refractory component, at least about 50% by weight chamotte, or at least about 60% by weight chamotte, or at least about 65% by weight chamotte, and/or up to about 92% by weight chamotte, or up to about 85% by weight chamotte, or up to about 80% by weight chamotte. "Chamotte" is defined herein as a cement-free aluminum-silicate refractory composition that includes about 35% to about 49% by weight alumina ($Al_2O_3$), about 51% to about 65% by weight silica ($SiO_2$) and zero to about 4% by weight iron, based on the weight of the chamotte. Chamotte can be produced by firing refractory clays having this composition to elevated temperatures of about 900° C to about 1200° C, followed by grinding and screening to desired particle sizes. In one embodiment, the chamotte can include about 40% to about 45% by weight of the alumina, about 55% to about 60% by weight of the silica, and 0 to about 3% by weight of the iron, based on the weight of the chamotte. Chamotte can be the primary structural ingredient of the porous refractory composition, providing strength and integrity to the finished refractory parts, as well as elevated temperature resistance and chemical resistance.

In one embodiment, the chamotte can include a mixture of chamotte components having first, second and third particle size ranges measured using mesh screens. The first chamotte component can have screen mesh particle sizes ranging from 2380 microns (8 mesh) to 6730 microns (3 mesh). The second chamotte component can have screen mesh particle sizes ranging from 841 microns (20 mesh) to less than 2380 microns (8 mesh). The third chamotte component can have screen mesh particle sizes less than 841 microns (8 mesh). The first, second and third chamotte components can be prepared by grinding and screening using the appropriate mesh screen sizes, as explained above. The chamotte suitably includes about 35% to about 65% by weight of the first chamotte component, or about 40% to about 60% by weight, or about 45% to about 55% by weight, based on the weight of the chamotte. The chamotte suitably includes about 10% to about 35% by weight of the second chamotte component, or about 15% to about 30% by weight, or about 17% to about 25% by weight, based on the weight of the chamotte. The chamotte suitably includes about 15% to about 45% by weight of the third chamotte component, or about 20% to about 40% by weight, or about 25% to about 35% by weight, based on the weight of the chamotte.

In one embodiment, the solid refractory component can include at least about 5% by weight mullite, or at least about 10% by weight mullite, and/or up to about 25% by weight mullite, or up to about 20% by weight mullite, based on the weight of the solid refractory component. Mullite is a rare silicate mineral having either or both of two stoichiometric forms, namely $3Al_2O_3 \cdot 2SiO_2$ or $2Al_2O_3 \cdot SiO_2$. Mullite is resistant to corrosion under elevated temperature conditions and helps to facilitate excellent corrosion resistance for the overall porous refractory composition and refractory parts made from it. The mullite can have a median particle size of less than about 100 microns, or about 1 to about 50 microns, or less than about 44 microns (325 mesh). By using micronized mullite having the small particle size, the mullite helps to stabilize the ingredients of the wet porous refractory composition, helping them to remain uniformly suspended during casting.

In one embodiment, the solid refractory component of the porous refractory composition can include fused silica particles. When used, the fused silica particles can be present in an amount of about 3% to about 20% by weight, or about 5% to about 15% by weight, based on the weight of the solid refractory component. Fused silica is an amorphous (non-crystalline) silica composed of a silicon dioxide having a highly crosslinked three-dimensional molecular structure. The fused silica particles can have a median particle size of less than about 100 microns, or about 1 to about 50 microns, and can have particles sizes less than about 44 microns (325 mesh). When used, the fused silica can help improve the resistance of the porous refractory composition and porous refractory articles to molten metal and vapors.

In one embodiment, the solid refractory component of the porous refractory composition can include calcined alumina. When used, the calcined alumina can be present in an amount of about 0.5% to about 4% by weight, or about 1% to about 3% by weight of the solid refractory component. The calcined alumina may have a median particle size of about less than about 100 microns, or about 1 to about 50 microns, and can suitably have particle sizes less than about 44 microns (325 mesh). When used, the calcined alumina can help improve the resistance of the porous refractory composition and porous refractory articles to molten metals and vapors.

In one embodiment, the solid refractory component of the porous refractory composition can include microsilica, suitably in amounts of about 0.5% to about 4% by weight, or about 1% to about 3% by weight of the solid refractory component. The optional microsilica (which is exclusive of the colloidal silica binder described below) may have a median particle size of about 100 microns or less (e.g., about 0.1 to about 100 microns), or about 25 microns or less, or about 15 microns less, or about 5 microns or less. When used, the microsilica improves the initial flow characteristics of the porous refractory composition.

On one embodiment, the solid refractory component can include about 50% to about 92% by weight of the chamotte, about 5% to about 25% by weight of the mullite, and about 3% to about 20% by weight of the fused silica. This embodiment of the solid refractory component can optionally include about 0.5% to about 4% by weight of the calcined alumina and/or about 0.5% to about 4% by weight of the microsilica.

### ii. Solid refractory components based on calcine grog, mullite, and alumina

In some embodiments, the solid refractory component of the porous casting composition can include a mixture of calcine grog, mullite, and alumina, and optional fumed silica and/or cryolite. Calcine grog is a hard, calcined (high-temperature fired) clay or clay-like material that contains about 45% to about 70% by weight alumina, about 25% to about 50% by weight silica, and up to about 5% combined weight of other oxides such as titanium oxide and iron oxide. For example, the solid refractory component of the porous refractory composition can include, by weight of the solid refractory component, at least about 20% by weight calcine grog, or at least about 24% by weight calcine grog, or at least about 28% by weight calcine grog, and/or up to about 40% by weight calcine grog, or up to about 36% by weight calcine grog, or up to about 32% by weight calcine grog. The solid refractory component can include, by weight of the solid refractory component, at least about 25% by weight mullite, or at least about 29% by weight mullite, or at least about 33% by weight mullite, and/or up to about 45% by weight mullite, or up to about 41% by weight mullite, or up to about 37% by weight mullite.

The solid refractory component can include, by weight of the solid refractory component, at least about 20% by weight alumina, or at least about 24% by weight alumina, or at least about 28% by weight alumina, and/or up to about 40% by weight alumina, or up to about 36% by weight alumina, or up to about 32% by weight alumina. In one embodiment, the alumina can include a mixture of reactive alumina and bubble alumina. Reactive alumina is a high purity aluminum oxide having a small crystal size of less than about 1 micron, which is ground to the individual crystals. Bubble alumina is a rigid, low density insulating refractory material that includes hollow, high purity alumina spheres bound in alumina cement. When both are present, the reactive alumina and bubble alumina may be present in weight ratios of about 1:1 to about 1:5, or about 1:2 to about 1:4 reactive alumina to bubble alumina.

The solid refractory component of the porous refractory composition can optionally include fumed silica powder in an amount of about 1% to about 10% by weight, or about 3% to about 7% by weight of the solid refractory component. Other optional ingredients include about 0.1 to about 1.0% by e weight cryolite and about 0.02 to about 0.1% by weight magnesium oxide.

### iii. Solid refractory components based on perlite, kyanite, and calcined flint clay

In some embodiments, the solid refractory component of the porous casting composition can include a mixture of perlite, kyanite, and calcined flint clay, and optional calcined alumina and/or fumed silica. Perlite spheres are formed by cracking volcanic glass during cooling. Perlite includes mostly silica (about 65-75% by weight), and minor amounts of alumina (about 10-18% by weight), sodium and potassium oxides (about 5-10% by weight combined) and trapped water molecules (about 2-5% by weight). Kyanite is an aluminosilicate complex having the general formula $Al_2SiO_5$. Calcined flint clay is primarily composed of hydrated aluminosilicate, $Al_2O_3 \cdot 2SiO_2 \cdot 2H_2O$ with minor amounts of quartz, feldspar, mica, and chlorite.

For example, the solid refractory component of the porous refractory composition can include, by weight of the solid refractory component, at least about 15% by weight perlite, or at least about 25% by weight perlite, or at least about 30% by weight perlite, and/or up to about 40% by weight perlite, or up to about 35% by weight perlite, or up to about 20% by weight perlite. The solid refractory component can include, by weight of the solid refractory component, at least about 30% by weight kyanite, or at least about 35% by weight kyanite, or at least about 40% by weight kyanite, and/or up to about 55% by weight kyanite, or up to about 50% by weight kyanite, or up to about 45% by weight kyanite. The solid refractory component can include, by weight of the solid refractory component, at least about 4% by weight calcined flint clay, or at least about 8% by weight calcined flint clay, or at least about 20% by weight calcined flint clay, and/or up to about 25% by weight calcined flint clay, or up to about 15% by weight calcined flint clay, or up to about 10% by weight calcined flint clay.

In these embodiments, the solid refractory component of the porous refractory composition can optionally include about 2% to about 8% by weight fumed silica, about 2% to about 8% by weight calcined alumina, about 0.3% to about 1.5% by weight magnesium oxide, about 2% to about 8% by weight added water, and/or about 0.5% to about 2.0% by weight added methanol.

### iv. Solid refractory components based on bauxite and alumina

In some embodiments, the solid refractory component of the porous casting composition can include a mixture of bauxite and alumina, and optional silicon carbide, fumed silica, pellet pitch, aluminum powder, and/or magnesium oxide. Bauxite is a primarily amorphous clay rock and is primarily composed of hydrated alumina with minor amounts of iron oxides. The alumina can include one or more of brown fused alumina, white fused alumina, reactive alumina, tabular alumina, calcined alumina, and Alpha Star® (which is a homogeneous calcined high alumina aggregate).

For example, the solid refractory component of the porous refractory composition can include, by weight of the solid refractory component, at least about 14% by weight bauxite, or at least about 27% by weight bauxite, or at least about 40% by weight bauxite, or at least about 50% by weight bauxite, and/or up to about 80% by weight bauxite, or up to about 70% by weight bauxite, or up to about 60% by weight bauxite, or up to about 50% by weight bauxite. The solid refractory component can include, by weight of the solid refractory component, at least about 15% by weight alumina, or at least about 25% by weight alumina, or at least about 40% by weight alumina, or at least about 55% by weight alumina, and/or up to about 80% by weight alumina, or up to about 70% by weight alumina, or up to about 65% by weight alumina, or up to about 60% by weight alumina. Non-limiting examples of alumina include mixtures of brown fused alumina and reactive alumina, mixtures of tabular alumina and calcined alumina, mixtures of tabular alumina with Alpha Star®, and any one or more alumina compounds.

In these embodiments, the solid refractory component can optionally include calcine grog, and/or mullite in a combined weight of about 5% to about 30% by weight. The solid refractory component can optionally include about 2% to about 25% by weight silicon carbide, about 2% to about 8% by weight aluminum fluoride, about 1% to about 5% by weight fumed silica, about 1% to about 5% by weight microsilica, about 0.5% to about 2.0% by weight pellet or coal tar pitch, about 0.5% to about 2.5% by weight aluminum powder, about 0.5% to about 2.5% by weight silica fines, about 0.1% to about 1% by weight cryolite, and/or about 0.01% to about 1% by weight magnesium oxide.

### v. Solid refractory components based primarily on calcine grog

In some embodiments, the solid refractory component of the porous casting composition can primarily include calcine grog. Examples of calcine grog include without limitation Mulcoa® 43, Mulcoa® 47, Mulcoa® 60, Mulcoa® 70, T-Cast grog, and the like, where the numbers on the Mulcoa® refer to the approximate alumina content. For example, the solid refractory component of the porous refractory composition can include, by weight of the solid refractory component, at least about 55% by weight calcine grog, or at least about 60% by weight calcine grog, or at least about 64% by weight calcine grog, or at least about 68% by weight calcine grog, and/or up to about 94% by weight calcine grog, or up to about 90% by weight calcine grog, or up to about 86% by weight calcine grog, or up to about 82% by weight calcine grog.

These embodiments of the solid refractory component can also include one or more secondary refractory ingredients. The one or more secondary refractory ingredients can be selected from kyanite, fused silica, tabular alumina, white fused alumina, calcined alumina, zircon flour, mullite, silicon carbide, and combinations thereof. The one or more secondary refractory ingredients can be present in a combined weight of at least about 5% by weight of the solid refractory component, or at least about 10% by weight of the solid refractory component, or at least about 15% by weight of the solid refractory component, and/or up to about 40% by weight of the solid refractory component, or up to about 35% by weight of the solid refractory component, or up to about 30% by weight of the solid refractory component.

In these embodiments, the solid refractory component can optionally include about 1% to about 15% by weight calcined alumina, about 1% to about 8% by weight fumed silica, about 1% to about 8% by weight microsilica, about 1% to about 8% by weight aluminum fluoride, about 0.1% to about 1% by weight cryolite, and/or about 0.01% to about 1% by weight magnesium oxide.

### vi. Solid refractory components based primarily on calcined flint clay

In some embodiments, the solid refractory component of the porous casting composition can primarily include calcined flint clay, with lesser amounts of kyanite and calcined alumina. For example, the solid refractory component of the porous refractory composition can include, by weight of the solid refractory component, at least about 55% by weight calcined flint clay, or at least about 60% by weight calcined flint clay, or at least about 65% by weight calcined flint clay, and/or up to about 80% by weight calcined flint clay, or up to about 75% by weight calcined flint clay, or up to about 70% by weight calcined flint clay. The solid refractory component can include at least about 5% by weight kyanite, or at least about 9% by weight kyanite, or at least about 13% by weight kyanite, and/or up to about 38% by weight kyanite, or up to about 30% by weight kyanite, or up to about 22% by weight kyanite. In one embodiment, mullite can be substituted for some or all of the kyanite. The solid refractory component can include at least about 4% by weight calcined alumina, or at least about 6% by weight calcined alumina, or at least about 8% by weight calcined alumina, and/or up to about 15% by weight calcined alumina, or up to about 13% by weight calcined alumina, or up to about 11% by weight calcined alumina.

In addition to the foregoing, the solid refractory component can optionally include about 5% to about 20% combined weight of silicon carbide and/or mullite, about 1% to about 5% by weight fumed silica, about 0.1% to about 1.5% by weight cryolite, and/or about 0.01% to about 1% by weight magnesium oxide.

### vii. Solid refractory components based significantly on tabular alumina

In some embodiments, the solid refractory component of the porous casting composition can include significant amounts of tabular alumina, with lesser amounts of reactive alumina and/or calcined alumina. For example, the solid refractory component of the porous refractory composition can include, by weight of the solid refractory component, at least about 20% by weight tabular alumina, or at least about 30% by weight tabular alumina, or at least about 40% by weight tabular alumina, and/or up to about 95% by weight tabular alumina, or up to about 80% by weight tabular alumina, or up to about 65% by weight tabular alumina. The solid refractory component can include zero to about 10% by weight reactive alumina, or about 2% to about 10% by weight reactive alumina and can include zero to about 15% by weight calcined alumina, or about 3% to about 15% by weight calcined alumina.

In addition to the foregoing, the solid refractory component can include enough of the following optional ingredients to bring the total ingredients up to about 100%. The solid refractory component can optionally include about 5% to about 45% by weight zircon flour, about 5% to about 35% by weight zircon sand, about 5% to about 30% by weight fused mullite, about 5% to about 35% by weight calcine grog, about 5% to about 25% by weight bubble alumina, about 5% to about 25% by weight bauxite, about 5% to about 20% by weight silicon carbide, about 2% to about 10% by weight white fused alumina, about 2% to about 8% by weight aluminum fluoride, about 1% to about 5% by weight fumed silica, about 1% to about 5% by weight microsilica (silica fume), about 0.5% to about 2.0% by weight aluminum powder, about 0.2% to about 2.0% by weight cryolite, and/or about 0.01% to about 1.0% by weight magnesium oxide.

### viii. Solid refractory components based primarily on zirconia

In some embodiments, the solid refractory component of the porous casting composition can primarily include zirconia, with lesser amounts of calcined alumina and reactive alumina. For example, the solid refractory component of the porous refractory composition can include, by weight of the solid refractory component, at least about 55% by weight zirconia, or at least about 60% by weight zirconia, or at least about 65% by weight zirconia, and/or up to about 98% by weight zirconia, or up to about 92% by weight zirconia, or up to about 85% by weight zirconia. The zirconia can be in the form of zircon flour, zircon sand, or any suitable particles. The solid refractory component can include zero to about 10% by weight, suitably about 2% to about 10% by weight calcined alumina, and zero to about 10% by weight, suitably about 2% to about 10% by weight reactive alumina.

In addition to the foregoing, the solid refractory component can optionally include about 5% to about 25% by weight mullite, about 1% to about 5% by weight fumed silica, about 0.5% to about 2.0% by weight aluminum powder, and/or about 0.01% to about 1.0% by weight magnesium oxide.

### ix. Solid refractory components based primarily on fused silica

In some embodiments, the solid refractory component of the porous casting composition can primarily include fused silica, with lesser amounts of silicon carbide. For example, the solid refractory component of the porous refractory composition can include, by weight of the solid refractory component, at least about 55% by weight fused silica, or at least about 60% by weight fused silica, or at least about 65% by weight fused silica, and/or up to about 97% by weight fused silica, or up to about 92% by weight fused silica, or up to about 85% by weight fused silica. The solid refractory component can include no silicon carbide, or at least about 5% by weight silicon carbide, or at least about 10% by weight silicon carbide, or at least about 15% by weight silicon carbide, and up to about 30% by weight silicon carbide, or up to about 25% by weight silicon carbide, or up to about 20% by weight silicon carbide.

In addition to the foregoing, the solid refractory component can optionally include about 1% to about 10% by weight fumed silica, about 1% to about 10% by weight microsilica, and/or about 0.01% to about 1.0% by weight magnesium oxide.

### x. Solid refractory components based primarily on recycled crushed glass

In some embodiments, the solid refractory component of the porous casting composition can primarily include crushed glass, suitably recycled crushed glass, with lesser amounts of fused silica. For example, the solid refractory component of the porous refractory composition can include, by weight of the solid refractory component, at least about 50% by weight crushed glass, or at least about 55% by weight crushed glass, or at least about 60% by weight crushed glass, and/or up to about 90% by weight crushed glass, or up to about 85% by weight crushed glass, or up to about 80% by weight crushed glass. The solid refractory component can include at least about 15% by weight fused silica, or at least about 20% by weight fused silica, or at least about 25% by weight fused silica, and up to about 40% by weight fused silica, or up to about 35% by weight fused silica, or up to about 30% by weight fused silica.

In addition to the foregoing, the solid refractory component can optionally include about 5% to about 20% by weight refractory sand, about 1% to about 10% by weight fumed silica, and/or about 0.01% to about 1.0% by weight magnesium oxide.

### xi. Solid refractory components based primarily on brown fused alumina

In some embodiments, the solid refractory component of the porous casting composition can primarily include brown fused alumina, with lesser amounts of reactive alumina and silicon carbide. For example, the solid refractory component of the porous refractory composition can include, by weight of the solid refractory component, at least about 55% by weight brown fused alumina, or at least about 60% by weight brown fused alumina, or at least about 65% by weight brown fused alumina, and/or up to about 85% by weight brown fused alumina, or up to about 80% by weight brown fused alumina, or up to about 75% by weight brown fused alumina. The solid refractory component can include about 1.5% to about 10% by weight reactive alumna and about 5% to about 25% by weight silicon carbide.

In addition to the foregoing, the solid refractory component can optionally include about 1% to about 5% by weight aluminum powder, about 1% to about 5% by weight fumed silica, about 1% to about 5% by weight microsilica, about 0.5% to about 2.0% by weight pellet pitch, petroleum pitch or carbon black, and/or about 0.01% to about 1.0% by weight magnesium oxide.

### xii. Solid refractory components based primarily on quartz

In some embodiments, the solid refractory component of the porous casting composition can primarily include quartz. For example, the solid refractory component of the porous refractory composition can include, by weight of the solid refractory component, at least about 80% by weight quartz, or at least about 85% by weight quartz, or at least about 90% by weight quartz, and/or up to about 99% by weight quartz, or up to about 97% by weight quartz, or up to about 95% by weight quartz.

In addition to the foregoing, the solid refractory component can optionally include about 1% to about 15% by weight fumed silica, about 1% to about 15% by weight microsilica, and/or about 0.01% to about 1.0% by weight magnesium oxide.

Each embodiment of the solid refractory component can be mixed with the foamed colloidal silica binder to make the porous refractory composition. The porous refractory composition can include at least about 3% by weight of the foamed colloidal silica binder, or at least about 6% by weight of the foamed colloidal silica binder, or at least about 9% by weight of the foamed colloidal silica binder, or at least about 12% by weight of the foamed colloidal silica binder. The porous refractory composition can include up to about 50% by weight of the foamed colloidal silica binder, or up to about 40% by weight of the foamed colloidal silica binder, or up to about 35% by weight of the foamed colloidal silica binder, or up to about 30% by weight of the foamed colloidal silica binder, or up to about 25% by weight of the foamed colloidal silica binder, or up to about 20% by weight of the foamed colloidal silica binder. The porous refractory composition can include up to about 97% by weight of the solid refractory component (exclusive of the foamed colloidal silica binder) or up to about 94% by weight of the solid refractory component or up to about 91% by weight of the solid refractory component or up to about 88% by weight of the solid refractory component. The porous refractory composition can include at least about 50% by weight of the solid refractory component, or at least about 60% by weight of the solid refractory component, or at least about 65% by weight of the solid refractory component, or at least about 70% by weight of the solid refractory component, or at least about 75% by weight of the solid refractory component, or at least about 80% by weight of the solid refractory component. For some porous refractory compositions, using higher amounts of the foamed colloidal silica binder can result in higher porosity in the porous refractory composition and porous refractory articles made from it.

The porous refractory composition can be made by mixing the ingredients of the solid component, for example, chamotte, mullite, fused silica, calcined alumina (if present) and microsilica (if present) together, to form a dry blend representing the solid refractory component. The ingredients of the solid component can be tumble blended or otherwise mixed together using any suitable technique. The wet component, namely, the foamed aqueous colloidal silica binder, can then be added and mixed with the solid component to form a damp mixture representing the porous refractory composition. On one embodiment, the foamed colloidal silica binder is formed by separately adding a predetermined amount of standard colloidal silica binder with a precursor foamed colloidal silica binder to form the foamed colloidal silica binder *in situ* having the desired amount of overall foaming agent. The porous refractory composition can then be pumped, poured, or otherwise transported to a mold or other substrate, and subsequently dried and hardened, to form a porous refractory article.

**C. Porous Refractory Articles and Method of Making Them**

The porous refractory composition can be used to make a wide variety of porous refractory articles having light weight, low density, and thermal insulating properties in addition to the elevated temperature resistance and chemical resistance that are typically associated with the heavier, more dense refractory materials. Examples of applications for porous refractory parts include without limitation porous refractory bricks and liners, insulated furnaces, ovens, subhearths, walls, ceilings, roofs, floors, and doors. The refractory parts can be formed by first transporting the porous refractory composition to a mold, form, or other substrate. The porous refractory composition can be transported by pumping using a concrete pump, by pouring, or by any suitable casting technique. The finished refractory part can then be dried to remove the water and cure the refractory part. Drying can occur at room temperature for at least about 15 minutes up to several hours, followed by baking at an elevated temperature of at least about 100° C to ensure removal of the water. The baking can last anywhere from about 5 hours to about 30 hours depending on the size and shape of the refractory article and its specific composition.

Because the porous refractory article includes the dried foamed colloidal silica binder (less the water), the percentages of the ingredients shift slightly compared to the damp porous refractory composition. In one embodiment, the porous refractory article can include about 2% to about 30% by weight of the dried foamed colloidal silica binder and about 70% to about 98% by weight of the solid refractory component. The porous refractory article can include at least about 2% by weight of the dried foamed colloidal silica binder, or at least about 4% by weight of the dried foamed colloidal silica binder, or at least about 6% by weight of the dried foamed colloidal silica binder, or at least about 8% by weight of the dried foamed colloidal silica binder. The porous refractory article can include up to about 30% by weight of the dried foamed colloidal silica binder, or up to about 26% by weight of the dried foamed colloidal silica binder, or up to about 22% by weight of the dried foamed colloidal silica binder, or up to about 18% by weight of the dried foamed colloidal silica binder. The porous refractory composition can include up to about 98% by weight of the solid refractory component (exclusive of the dried foamed colloidal silica binder), or up to about 96% by weight of the solid refractory component, or up to about 94% by weight of the solid refractory component, or up to about 92% by weight of the solid refractory component. The porous refractory composition can include at least about 70% by weight of the solid refractory component, or at least about 74% by weight of the solid refractory component, or at least about 78% by weight of the solid refractory component, or at least about 82% by weight of the solid refractory component.

The dried foamed colloidal silica binder can be any embodiment of the foamed colloidal silica binder described above, with the water removed. The solid refractory component can be any embodiment of the solid refractory component described above.

The porous refractory articles can have a total porosity that is similar to or slightly different from the total porosity of the porous refractory composition that is used to make them. Although pumping or otherwise casting the porous refractory composition to a mold or substrate may cause a minor reduction in porosity, the subsequent removal of water can cause an offsetting or overcoming increase in the porosity of the porous refractory articles relative to the damp porous refractory composition. The finished porous refractory articles (after drying and hardening) can thus have a total porosity of at least about 25% by volume, or at least about 35% by volume, or at least about 45% by volume, or at least about 50% by volume, and up to about 75% by volume, or up to about 70% by volume, or up to about 65% by volume, measured using ASTM C 830-00.

The following Examples will further illustrate specific embodiments of the invention.

**EXAMPLES**

**Test Procedures Using a Specific Gravity Cup to Measure Porosity, Bulk Density, Pore Volume, and Foam Half-Life**

A cup having a known volume, called a "specific gravity cup," has a predetermined measured volume which, for the following examples, was 52.72 ml. The empty cup was weighed and was filled with a standard colloidal silica binder (40% by weight colloidal silica particles and 60% by weight water) as a control. Because the experimental foamed binder samples all contained 40% by weight colloidal silica particles, this amount was used as the control sample. The filled cup was weighed, and the empty cup weight was subtracted to determine the control sample weight. The control sample weight was divided by the volume, 52.72 ml, to determine the control sample bulk density of 1.298 grams/cm$^3$ with no foaming. The reciprocal of the control sample bulk density, 0.77 cm$^3$/gram, was noted.

For each sample of foamed colloidal silica, the specific gravity cup was similarly used to determine the weight and bulk density of the foamed colloidal silica binder. The total porosity and total pore volume of each sample were then calculated from the following equation:

$$\text{Porosity} = [1 - (\text{sample bulk density} / \text{control bulk density})] \times 100\%$$

$$\text{Pore Volume} = (1 / \text{sample bulk density}) \ \text{minus} \ (1 / \text{control bulk density})$$

$$= (1 / \text{sample bulk density}) - 0.77 \ \text{cm}^3/\text{gram}$$

The half-life is defined as the amount of time required, in a relaxed state, to convert 50% of the colloidal silica binder in a foamed sample back to its original (non-foamed) form. For a specific gravity cup filled with foamed colloidal silica binder, the "total non-foamed height" is the original foamed binder height multiplied by [(100 - % Porosity) / 100]. The foam half-life is the amount of time required for the non-foamed binder to reach a height that is one-half of the original foamed binder height. For example, if the total foamed binder height is 10 cm and the Porosity is 70%, then the original foamed binder height is 10 cm X [(100-70)/100], or 3 cm. The half-life is then the amount of time required for the non-foamed binder to reach a height of 1.5 cm, visible through the wall of a transparent cup. The half-life test can also be performed using a specific gravity cup or similar measuring cup whose measurements are expressed in volume. For example, if the colloidal silica binder (prior to foaming) fills 200 ml of a measuring cup, and the colloidal silica binder is the completely foamed by mixing, then the half-life is the amount of time for 100 ml of the binder to return from the foamed to the non-foamed state.

The following Examples rely on the analytical techniques described herein to determine the properties of the foamed colloidal silica binder.

**Half-Life Examples**

As a control, "Cement Building Foam Agent 1281" manufactured by Tianjin Hero-Land S&T Development Co., Ltd. of Tianjin, China (herein "Foam Agent 1281") was mixed with 200 ml of distilled water in a weight ratio of 1:100 in a standard 2-liter semi-transparent plastic measuring cup. Prior to foaming, the liquid level visible from the side of the cup was 200 ml. The mixture was agitated using a portable drill equipped with a whisk attachment until all of the liquid was converted to foam and the visible liquid level was zero. The drill mixer was removed, and the timer was set at T= 0. The timing continued until the liquid level in the measuring cup returned to the 100 ml level. The half-life of the foam was determined to be 40 minutes.

Next, Foam Agent 1281 was mixed with 200 ml of a standard (non-foamed) colloidal silica binder containing 40% by weight colloidal silica dispersed in 60% by weight water. Again, prior to foaming, the aqueous colloidal silica binder had an appearance of liquid up to the 200 ml level in the cup. The mixture was agitated using the same portable drill equipped with a whisk attachment until all of the aqueous colloidal silica was converted to foam. The drill mixer was removed, and the timer was set at T= 0. The timing continued until the visible liquid level in the measuring cup returned to the 100 ml level. The half-life of the foamed colloidal silica binder was determined to be 90 minutes.

Surprisingly, the half-life of the foamed colloidal silica binder was more than double the half-life of the aqueous foam devoid of colloidal silica. Without being bound by theory, it appears that the colloidal silica particles interact with the synthetic, non-protein foaming agent to yield a stronger, more durable foam than would result from the foaming of water alone.

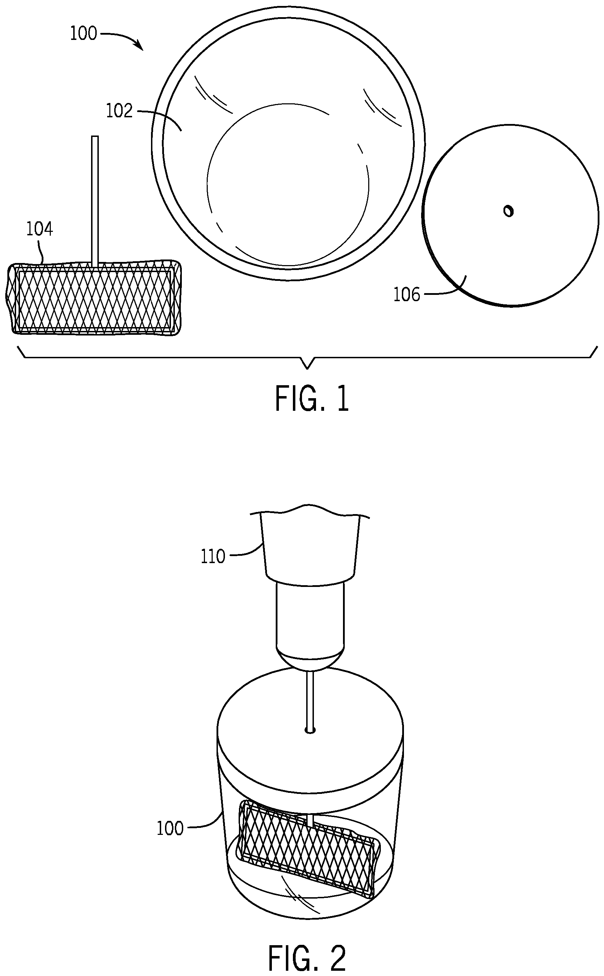

Fig. 1 shows a disassembled screen mixer used in the first and second sets of experiments below. The screen mixer 100 includes a mixing bowl 102, a rotatable screen 104 adapted for connection to a drill, and a cover lid 106.

**Experiments Using Aqueous Foam, No Colloidal Silica**

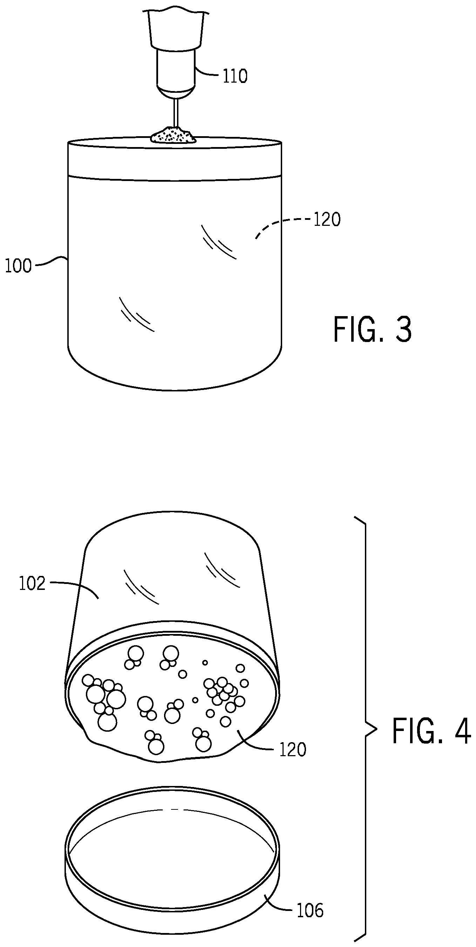

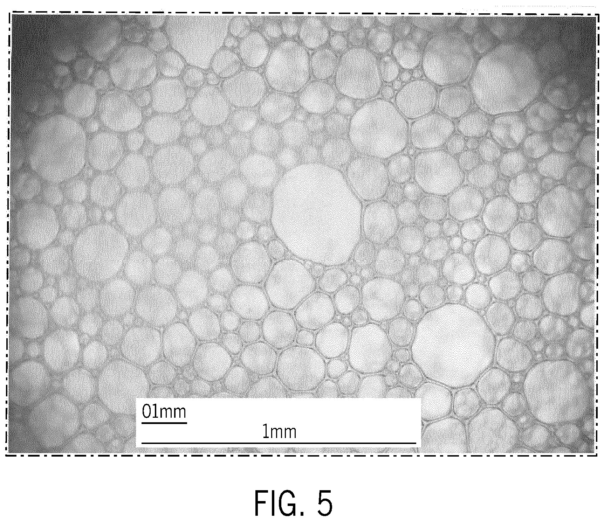

For a first set of experiments, Foam Agent 1281 was mixed with water in a weight ratio of 1:30. This was accomplished by placing the ingredients in the screen mixer 100 and connecting the screen mixer 100 to a two-speed drill 110 as shown in Fig. 2. The mixing occurred for one minute at a speed of approximately 1000 rpm (high speed), resulting in the aqueous foam 120 shown in Fig. 3. The lid 106 was then removed from the bowl 102 and the bowl 102 was held upside down. As shown, the aqueous foam 120 remained in the bowl 102 and did not significantly deform or pour. This indicated that the aqueous foam 120 had excellent wet compressive strength and tensile splitting strength, sufficient to prevent dissociation of the foam cells from the bowl 102 and from each other. The aqueous foam 120 was analyzed under a microscope using 50X magnification and a photomicrograph was taken, shown in Fig. 5. While the individual cells varied widely in size, substantially all of the cells were closed, suggesting a ratio of closed porosity to total porosity of close to 100%.

**Experiments Using Foamed Colloidal Silica Made by Mixing Aqueous Foam with Colloidal Silica Binder in a Refractory Composition**

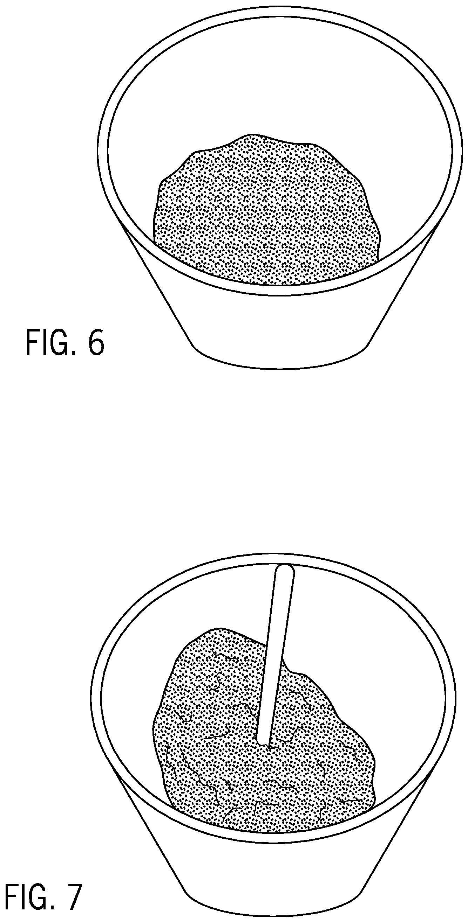

This second set of experiments demonstrated the preparation of a foamed colloidal silica binder and porous refractory composition by adding and mixing some of the aqueous foam 120 to a conventional refractory composition that was initially prepared without any foaming agent. Fig. 6 shows a mixing bowl 102 containing 200 grams of a solid refractory component (85% by weight) and 30 grams of an aqueous colloidal silica binder (15% by weight) before any mixing. The colloidal silica binder contained 40% by weight colloidal silica particles and 60% by weight water, based on the weight of the binder, and no foaming agent. The solid refractory component contained almost entirely fused silica (99.5%) with very minor amounts of alumina and calcium oxide, The solid refractory component and the colloidal silica binder were mixed together for 1 minute at a drill speed of approximately 300 rpm (low speed), resulting in the damp refractory composition shown in Fig. 7 having low porosity.

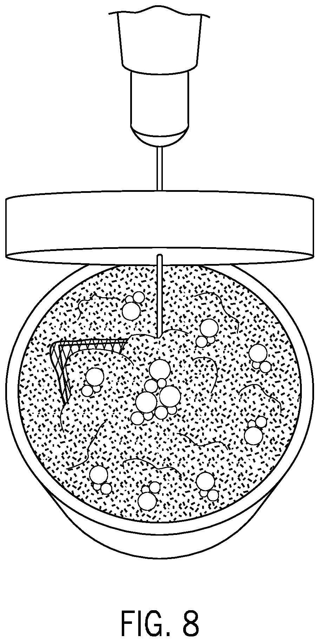

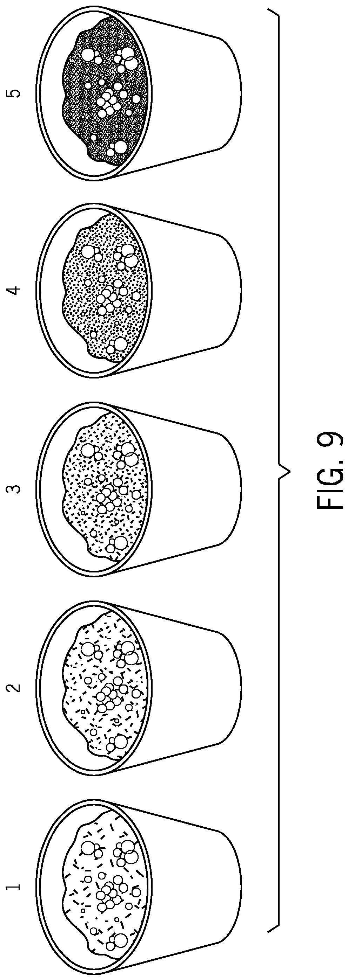

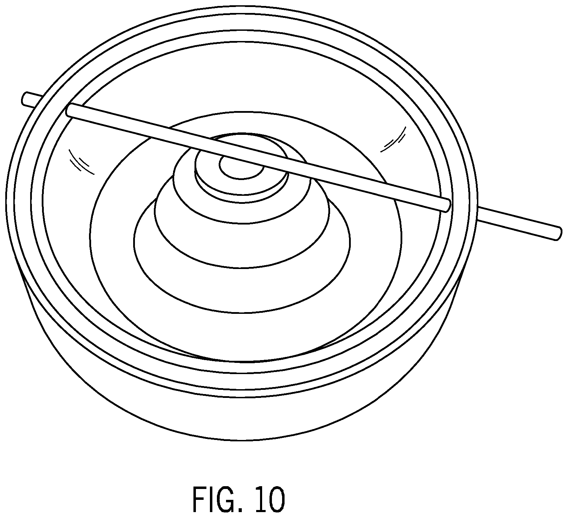

Next, the aqueous foam 120 was mixed with the pre-mixed refractory composition for a period of 1 minute and a drill speed of approximately 300 rpm (low speed) using the same mixing apparatus 100 as shown in Fig. 8. This experiment was repeated for various amounts of the aqueous foam 120, as illustrated in Fig. 9, Samples 1-5. The resulting refractory compositions were poured into cup-shaped molds (Fig. 9) and hockey puck-shaped molds (Fig. 10) and were dried until their internal temperatures reached 110° C. Each dried refractory article sample was then evaluated for apparent porosity (ASTM C 830-00) and bulk density (ASTM C 830-00).

Sample 1 (control) contained none of the aqueous foam 120 and contained 85% by weight of the solid refractory component and 15% by weight of the aqueous colloidal silica binder. The cup-shaped dried refractory article sample yielded an apparent porosity of 14.08% and a bulk density of 1.86 grams/cm$^3$, which are typical values for a standard refractory article made without a foamed colloidal silica binder.

Sample 2 contained only 1% by weight of the aqueous foam 120 which, when mixed with the 15% by weight colloidal silica binder contained in the refractory composition, resulted in an overall binder content of 16%. Yet the porosity of the cup-shaped dried refractory article increased substantially, to 34.72%, and the bulk density fell to 1.44 grams/cm$^3$, representing a drop of 22.6 percent.

Samples 3 and 4 contained 2% and 3% by weight of the aqueous foam 120, respectively. When the aqueous foam 120 was mixed with the 15% by weight colloidal silica binder in the refractory composition, the cup-shaped dried refractory articles had respective foamed colloidal silica binder contents of 17% and 18% by weight. The porosities of these samples increased further, to 44.52% and 52.35%, respectively. The respective bulk densities fell further to 1.22 grams/cm$^3$ and 1.03 grams/cm$^3$, representing drops of 34.4% and 44.6% compared to the control sample.

Sample 5 contained 4% by weight of the aqueous foam 120 and 15% by weight of the standard colloidal silica binder. When mixed, the total foamed colloidal silica binder content was 19%. The apparent porosity of the cup-shaped dried refractory article was 47.63% and the bulk density was 1.14 grams/cm$^3$, representing a drop of 38.7 percent compared to the control sample.

Of these five samples, Samples 1-3 showed good integrity for both the cup-shaped and the hockey-puck shaped dried refractory articles. Samples 4 and 5 were weaker. The next set of Examples demonstrate improved integrity when the foamed colloidal silica binder was completely prepared before adding it to the solid refractory component.

**Experiments Using Foamed Colloidal Silica Binder Made by Direct Addition of Foaming Agent to a Colloidal Silica Binder**

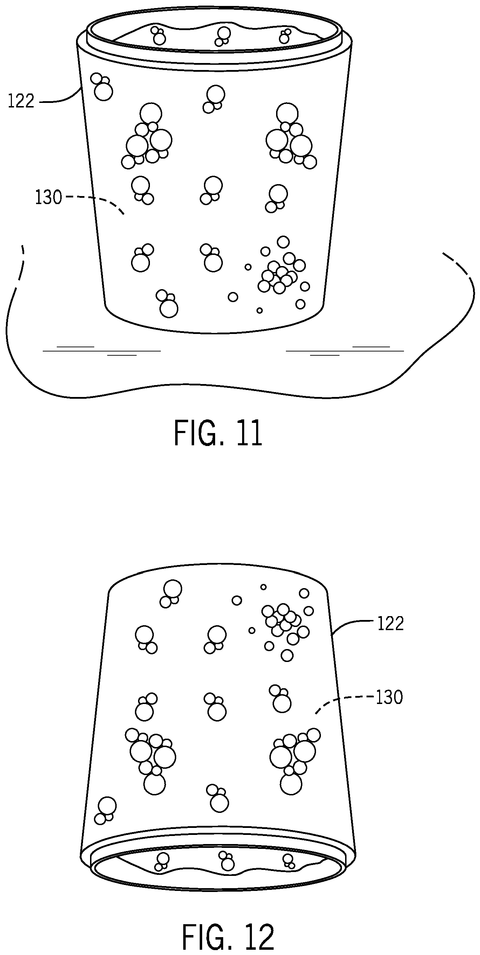

Referring to Fig. 11, Foam Agent 1281 was mixed with a colloidal silica binder that contained 40% by weight colloidal silica particles and 60% by weight water, using a mixing container 122. The mixture contained 2 grams of the foam agent and 200 grams of the colloidal silica binder, representing a 1:100 weight ratio of foam agent to colloidal silica binder and a 1:67 weight ratio of foam agent to water. The mixture was stirred at approximately 1000 rpm (high speed) for 1 minute to yield the foamed colloidal silica binder 130 having a density of 0.159 grams/cm$^3$. Referring to Fig. 12, when the mixing container was turned upside down, the foamed colloidal silica binder 130 remained in the mixing container and did not pour or significantly deform. This indicates that the foamed colloidal silica binder 130 had excellent wet compressive strength and tensile splitting strength, sufficient to prevent dissociation of the foam cells from the mixing container 122 and from each other.

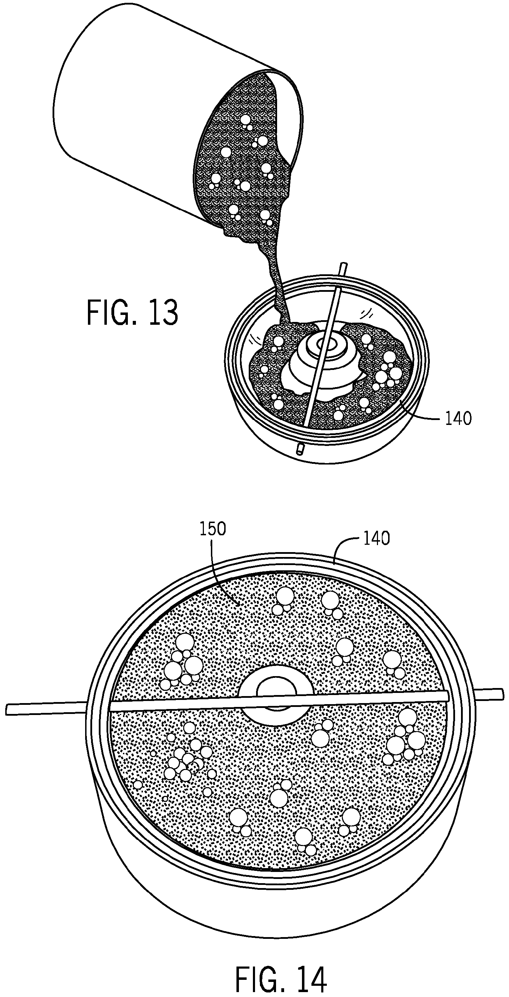

The foamed colloidal silica binder 130 was combined with the solid refractory component described above that contained almost entirely fused silica (99.5%) with very minor amounts of alumina and calcium oxide. The solid refractory component and the foamed colloidal silica binder were combined in a weight ratio of 20% foamed colloidal silica binder (140 grams) and 80% solid refractory component (560 grams) and mixed together for 1 minute at a mixing speed of approximately 300 rpm (low speed), resulting in the damp porous refractory composition shown in Fig. 13. The damp porous refractory composition was poured into the puck-shaped mold 140 as shown in Fig. 13. Once the puck-shaped mold 140 was filled, the mold was vibrated, causing the porous refractory casting composition to assume the shape of a hockey puck 150 as shown in Fig. 14.

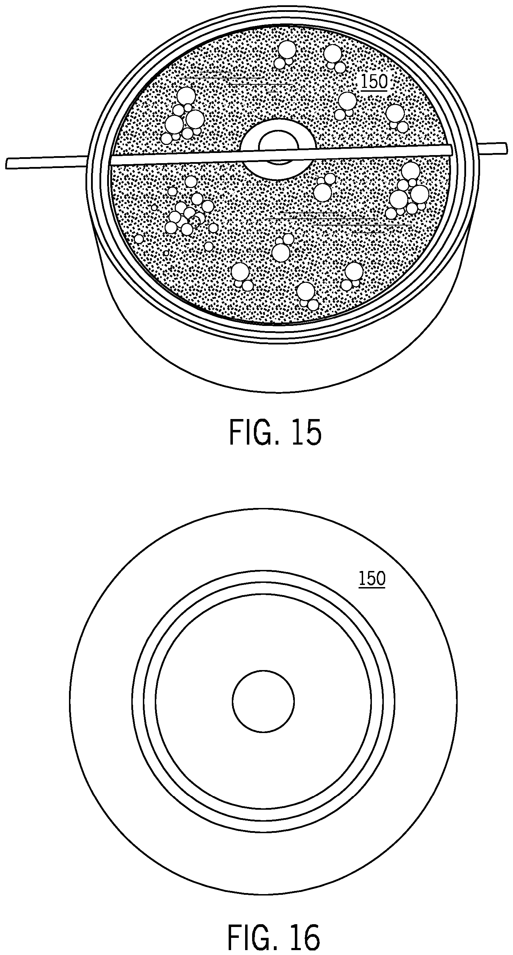

The porous casting composition was allowed to set overnight at room temperature, resulting in a hairline crack on the mold 140 but no cracking of the cast hockey puck 150 (Fig. 15). The hockey puck 150 was then removed from the mold and baked at 110° C for a period of 24 hours (Fig. 16). The resulting finished porous refractory part had an apparent porosity of 51.08% and a bulk density of 1.06 grams/cm$^3$. This compared to a bulk density of 1.10 grams/cm$^3$ for the wet porous casting composition. The finished porous refractory part was free of cracks and could be handled freely without any apparent fragility.


**Evaluation of Foamed Colloidal Silica Binder with Met-Silcast SC**

Met-Silcast SC is a commercial high purity fused silica shotcrete material that consists of a solid component entirely of fused silica (99.5%) with very minor amounts of alumina and calcium oxide, and a wet binder component that is 40% colloidal silica mixed with 60% water. During use, the wet and dry components are mixed together to form the refractory composition which can then be applied by casting, pumping or shotcreting and quickly dries to form a refractory article.

In a first series of experiments, samples as described below were cast into refractory shapes and dried according to ASTM C 830-00. The first three samples were dated 3/5/2023. Sample 1 (control) contained 80% by weight of the dry component and 20% by weight of the standard aqueous colloidal silica binder, with no foaming agent. Sample 2 contained 20.2% by weight of a foamed colloidal silica binder that was prepared by mixing Foam Agent 1281 with the standard binder in a 1:100 weight ratio. Sample 3 contained 25.2% of a foamed binder prepared by mixing Foam Agent 1281 with the standard binder in a 1:100 weight ratio. For Sample 1 dated 3/6/2023, binder percentage was 25.6% and contained Foam Agent 1281 in a 1:50 ratio to the standard colloidal silica binder.

The next four samples were dated 3/12/2023. For Sample 1, the binder percentage was 35.8% and contained Foam Agent 1281 in a 1:50 ratio to the standard colloidal silica binder. For Sample 2, the binder percentage was 37.6% and contained Foam Agent 1281 in a 1:74 ratio to the standard colloidal silica binder. For Sample 3, the binder percentage was 38.1% and contained Foam Agent 1281 in a 1:93 ratio to the standard colloidal silica binder. For Sample 4, the binder percentage was 37.61% and contained Foam Agent 1281 in a 1:91 ratio to the standard colloidal silica binder.

The samples were tested for apparent porosity, water absorption, apparent specific gravity, and bulk density using the procedures set forth in ASTM C 830-00. The results are shown in Table 1. Whereas the Met-Silcast control yielded a porosity of only 17.62%, the samples prepared using foamed colloidal silica binder all yielded porosities approaching or exceeding 50%. The highest porosities exceeding 60% occurred when a) the foamed colloidal silica binder was present at high levels of 37-39% but the ratio of foaming agent to colloidal silica binder was relatively low, on the order of 1:90 - 1: 100. These samples (Samples 3 and 4 dated 3/12/2023) also yielded the lowest bulk densities of 0.83 and 0.73 grans/cm$^3$, respectively.

Table 1: Properties of Refractory Samples Dated March 5-12, 2023

| | Foam testing Metsilcast SC | | | -100/F Metsilcast SC (screened fines) | | | | |
|---|---|---|---|---|---|---|---|---|
| Dried to 110 deg C | 3/5/2023 | | | 3/6/2023 | 3/12/2023 | | | |
| Sample | 1 | 2 | 3 | 1 | 1 | 2 | 3 | 4 |
| Sample wt (g) | 500 | 300 | 300 | 300 | 100 | 200 | 200 | 200 |
| Binder % Foam (type 1281) (g) | 20 0 | 0 60.7 | 0 75.5 | 0 76.72 | 0 35.82 | 0 75.2 | 0 76.1 | 0 75.22 |
| Foam (type 1281) (%) | 0 | 20.2 | 25.2 | 25.6 | 35.8 | 37.6 | 38.1 | 37.61 |

(continued)

| Dried to 110 deg C | Foam testing Metsilcast SC | | | -100/F Metsilcast SC (screened fines) | | | | |
|---|---|---|---|---|---|---|---|---|
| | 3/5/2023 | | | 3/6/2023 | 3/12/2023 | | | |
| Sample | 1 | 2 | 3 | 1 | 1 | 2 | 3 | 4 |
| Vibrate (flow table drops) Dry weight (D) | 217.84 | 131.75 | 89.89 | 121.04 | 105.4 | 126.06 | 96.84 | 51.53 |
| Suspended weight (S) | 119.21 | 71.78 | 48.45 | 65.68 | 57.58 | 68.93 | 52.6 | 27.49 |
| Saturated weight (W) | 238.93 | 190.54 | 136.86 | 182.75 | 173.15 | 188.83 | 169.33 | 97.93 |
| Volume (cm3) | 119.72 | 118.76 | 88.41 | 117.07 | 115.57 | 119.9 | 116.73 | 70.44 |
| Apparent Porosity, P% | 17.62 | 49.50 | 53.13 | 52.71 | 58.62 | 52.35 | 62.10 | 65.87 |
| Water Absorption, Aw, % | 9.68 | 44.62 | 52.25 | 50.98 | 64.28 | 49.79 | 74.86 | 90.04 |
| Apparent Specific Gravity, T | 2.21 | 2.20 | 2.17 | 2.19 | 2.20 | 2.21 | 2.19 | 2.14 |
| Bulk Density (ASTM C830), B g/cm3 | 1.82 | 1.11 | 1.02 | 1.03 | 0.91 | 1.05 | 0.83 | 0.73 |
| Bulk Density (lb/ft3) 62.423 lb/ft3=1 g/cm | 113.59 | 69.26 | 63.47 | 64.55 | 56.93 | 65.64 | 51.79 | 45.67 |
| Wet Density | N/A | 1.17 | 1.08 | 1.11 | N/A | 1.18 | 0.95 | 0.80 |
| Foam Density | N/A | 0.155 | N/A | N/A | 0.114 | 0.155 | 0.153 | 0.105 |

In a second series of experiments, standard colloidal silica binder (40% colloidal silica) was added and mixed in ratios of 14:86 to 20:80 ratio with the dry component to produce standard Met-Silcast SC. Then, in a second step, foamed colloidal silica binder containing Foam Agent 1281 in a 1:100 weight ratio to the standard colloidal silica binder was added to the refractory composition and mixed to produce the samples dated 4/20/2023. [Verify ratios] Refractory Sample 1 contained 6% of the foamed binder and 14% by weight of the standard binder, for an effective Foam Agent 1281 ratio of 1:333 based on total binder. Sample 2 contained 4% of the foamed binder and 16% by weight of the standard binder, for an effective Foam Agent 1281 ratio of 1:500 based on total binder. Sample 3 contained 2% of the foamed binder and 18% by weight of the standard binder, for an effective Foam Agent 1281 ratio of 1:1000 based on total binder. Sample 4 (control) contained none of the foamed binder and 20% by weight of the standard binder. Sample 5 contained 2% of the foamed binder and 20% by weight of the standard binder, for an effective Foam Agent 1281 ratio of 1:1100 based on total binder, but with a 10% increase in total binder (to 22%). Sample 6 contained 4% of the foamed binder and 20% by weight of the standard binder, for an effective Foam Agent 1281 ratio of 1:1200 based on total binder, but with a 20% increase in total binder (to 24%).

In order to simulate production conditions, larger (2000-lb) samples were made using 19% by weight of the standard colloidal silica binder and 3% by weight of the foamed colloidal silica binder containing Foam Agent 1281 in a 1:100 weight ratio to the standard colloidal silica binder. The effective Foam Agent 1281 ratio was 1:633 and the total binder content was 22%. These samples were dried at 110° C ("Plant" sample) and 1000° C ("Saggar' sample), respectively. All samples were tested for apparent porosity, water absorption, apparent specific gravity, and bulk density using the procedures set forth in ASTM C 830-00. The results are shown in Table 2.

As shown in Table 2, the apparent porosities of Samples 1-3, 5 and 6 were less than 50% but still at elevated levels, between 37% and 46%. This was not surprising, given that the effective contents of the Foaming Agent 1281 were significantly less than for the foamed refractory samples evaluated in Table 1. However, for the two production-sized samples that were heated to higher temperatures of 110° C and 1000° C, the apparent porosity surprisingly increased to between 50% and 53%. This suggests that drying conditions may influence the apparent porosity, such that more aggressive drying at higher temperatures results in increased porosity.

Table 2: Properties of Refractory Samples Dated 4/20/2023

| | Foam testing Metsilcast SC | | | No Foam | | | Plant Saggar | |
|---|---|---|---|---|---|---|---|---|
| Dried to 110 deg C | 4/20/2023 | | | | | | | |
| Sample | 1 | 2 | 3 | 4 | 5 | 6 | 110 C | 1000 C |
| Sample wt - dry (g) | 200 | 200 | 200 | 200 | 200 | 200 | 2000 | 2000 |
| Binder % | 14 | 16 | 18 | 20 | 20 | 20 | 19 | 19 |
| | | | | | | | | |
| Foam (type 1281) (%) | 6 | 4 | 2 | 0 | 2 | 4 | 3 | 3 |
| Vibrate (flow table drops) | | | | | | | | |
| Dry weight (D) | 21.545 | 24.514 | 25.446 | 35.597 | 26.546 | 19.992 | 5.157 | 7.1 |
| Suspended weight (S) | 11.636 | 13.331 | 13.851 | 19.369 | 14.429 | 10.793 | 2.785 | 3.946 |
| Saturated weight (W) | 29.708 | 32.359 | 32.481 | 38.618 | 33.816 | 27.825 | 7.708 | 10.65 |
| | | | | | | | | |
| Volume (cm3) | 18.072 | 19.028 | 18.63 | 19.249 | 19.387 | 17.032 | 4.923 | 6.704 |
| Apparent Porosity, P% | 45.17 | 41.23 | 37.76 | 15.69 | 37.50 | 45.99 | 51.82 | 52.95 |
| Water Absorption, Aw, % | 37.89 | 32.00 | 27.65 | 8.49 | 27.39 | 39.18 | 49.47 | 50.00 |
| Apparent Specific Gravity, T | 2.17 | 2.19 | 2.19 | 2.19 | 2.19 | 2.17 | 2.17 | 2.25 |
| Bulk Density (ASTM C830), B g/cm3 | 1.19 | 1.29 | 1.37 | 1.85 | 1.37 | 1.17 | 1.05 | 1.06 |
| Bulk Density (lb/ft3) 62.423 lb/ft3=1 g/cm | 74.43 | 80.43 | 85.27 | 115.45 | 85.48 | 73.28 | 65.40 | 66.12 |
| Wet Density | N/A | N/A | N/A | N/A | N/A | N/A | N/A | N/A |
| Foam Density | N/A | N/A | N/A | N/A | N/A | N/A | N/A | N/A |
| | | | | | | | | |
| Thermal Gradient (°C / mm) (gas burner) | N/A | N/A | N/A | 56.4 | 57.6 | 73.3 | | |

**Evaluation of Foamed Colloidal Silica Binder with Metpump® ASX 60**

Metpump® ASX 60 is a pumpable refractory mix whose solid component contains about 70% by weight calcine grog and lesser amounts of kyanite, calcined alumina, fumed silica, and cryolite. Normally the dry component is mixed with 10% by weight colloidal silica binder containing 40% colloidal silica in water to form the pumpable refractory composition.

Samples as described below, dated May 28, 2018, were cast into refractory shapes and dried according to ASTM C 830-00. Samples 1 and 2 (controls) contained 90% by weight of the solid component and 10% by weight of the standard aqueous colloidal silica binder (40% colloidal silica), with no foaming agent. Samples 3-6 contained 5% of the standard colloidal silica binder and 3, 4, 5 and 6.5% by weight of a foamed colloidal silica binder containing a 1:150 weight ratio of Foam Agent 1281 to colloidal silica binder. Samples 7-9 contained 6% by weight of the standard colloidal silica binder and 3, 4 and 5% by weight of the foamed colloidal silica binder. Samples 10 and 11 contained 7% by weight of the standard colloidal silica binder and 2 and 3% by weight of the foamed colloidal silica binder. Sample 12 contained 8% by weight standard colloidal silica binder and 2% by weight foamed colloidal silica binder. Sample 13 contained 10% by weight of the foamed colloidal silica binder.

These samples were dried at 110° C for 24 hours. The dried samples were tested for porosity and bulk density using the procedures set forth in ASTM C 830-00, as well as cold modulus of rupture ("CMOR") and cold crush strength ("CCS") at both 110° C and 815° C. The results are shown in Table 3. As shown in samples 6 and 9, porosities exceeding 50% were only achieved when the foamed binder content was at least 5% by weight and the total binder content was at least 11% by weight. As shown by samples 5, 8, and 13, porosities exceeding 40% were only achieved when the foamed binder content was at least 4% by weight and the total binder content was at least 10% by weight.

Table 3: Properties of Refractory Samples Dated May 28, 2018

| Binder Amount(%) | Foam Amount(%) | Slump | Flow | Wet Bulk Density (g/cm3) | Dimensional Density(110°C) | Dimensional Density (815°C) | CMOR (MPa) (110°C) | CMOR (MPa) (815°C) | CCS trnPay (110°C) | CCS (MPa) (815°C) | Density (110°C) | Porosity (110°C) | Density (815°C) | Porosity (815°C) |
|---|---|---|---|---|---|---|---|---|---|---|---|---|---|---|
| 10 | 0 | 28 | 88 | 2.64 | 2.48 | 2.41 | 4.36 | 18.06 | 31.15 | 89.5 | 245 | 14.06 | 2.47 | 14.64 |
| 10 | 0 | 28 | 88 | 2.64 | 248 | N/A | 4.69 | | 30.75 | N/A | 246 | 13.32 | N/A | N/A |
| 5 | 3 | 4 | 20 | 2.34 | 2.26 | 2.25 | 4.21 | 16.89 | 18.6 | 63.8 | 2.27 | 20.77 | 2.26 | 16.37 |
| 5 | 4 | 16 | 72 | 1.8 | 1.80 | 1.76 | 1.58 | 5.92 | <3 | 16.55 | 1.85 | 3548 | 1.82 | 37.34 |
| 5 | 5 | 44 | 100 | 1.64 | 1.57 | 1.55 | 1.59 | 2.51 | <3 | 5.6 | 1.67 | 41.62 | 1.67 | 42 |
| 5 | 6.5 | N/A | N/A | | 120 | N/A | 1.58 | | <3 | N/A | 1.36 | 51.15 | N/A | N/A |
| 6 | 3 | 12 | 56 | 1.98 | 1.95 | 1.95 | 2.85 | 9.67 | 7.55 | 26.15 | 1.97 | 31.35 | 1.99 | 31.14 |
| 6 | 4 | 48 | 108 | 1.64 | | 1.64 | 1.59 | 4.01 | <3 | 103 | 1.68 | 41.28 | 1.71 | 40.6 |
| 6 | 5 | 68 | 120 | 1.38 | 1.44 | 1.41 | 1.58 | 7.69 | <3 | <3 | 1.28 | 54.49 | 1.53 | 46.74 |
| 7 | 2 | 12 | 60 | 2.08 | 208 | 1.97 | 4.19 | 8.88 | 12.8 | 305 | 2.06 | 279 | 2.02 | 29.87 |
| 7 | 3 | 44 | 109 | 1.91 | 1.79 | 1.81 | 1.6 | 7.6 | 5.25 | 17.6 | 1.85 | 35.16 | 1.84 | 36.53 |
| 8 | 2 | 44 | 104 | 1.91 | 1.90 | 1.83 | 2.05 | 7.66 | 7.35 | 21 15 | 1.94 | 31.64 | 1.86 | 35.69 |
| 0 | 10 | N/A | N/A | 1.46 | 1.41 | 1.35 | 1.61 | 1.92 | <3 | <3 | 1.56 | 45.22 | 1.49 | 48.22 |

The embodiments of the invention described herein are exemplary. Various modifications and improvements can be made without changing the spirit and scope of the invention. The scope of the invention is indicated by the appended claims, and all changes that fall within the meaning and scope of equivalents are intended to be embraced therein.

**Claims**

1.  A method of making a porous refractory composition, comprising the steps of

    a) providing a synthetic, non-protein foaming agent;
    b) providing an aqueous colloidal silica binder including 20% to 70% by weight colloidal silica particles and 30% to 80% by weight water;
    c) providing a solid refractory component exclusive of the colloidal silica binder;
    d) mixing the synthetic, non-protein foaming agent with the aqueous colloidal silica binder to yield a foamed colloidal silica binder; and
    e) mixing 3% to 50% by weight of the foamed colloidal silica binder with 50% to 97% by weight of the solid refractory component to form the porous refractory composition.

2.  The method of claim 1, wherein step d) is performed before step e).

3.  The method of claim 1, wherein steps d) and e) are performed simultaneously.

4.  The method of any of claims 1 to 3, wherein the foamed colloidal silica binder has a total porosity of 50% to 95% by volume, a total pore volume of 0.75 to 15.0 grams/cm$^3$, and a half-life of at least 1 hour.

5.  The method of any of claims 1 to 4, wherein the synthetic non-protein foaming agent is mixed with the aqueous colloidal silica binder in a weight ratio to the water of 1:25 to 1:1500.

6.  The method of any of claims 1 to 5, wherein the foamed colloidal silica binder is formed by adding the synthetic non-protein foaming agent directly to the aqueous colloidal silica binder and mixing to form the foamed colloidal silica binder.

7.  The method of any of claims 1 to 5, wherein the foamed colloidal silica binder is formed by adding and mixing the synthetic non-protein foaming agent to a first quantity of the aqueous colloidal silica binder to form a precursor foamed colloidal silica binder and combining and mixing the precursor foamed colloidal silica binder with a second quantity of the aqueous colloidal silica binder to form the foamed colloidal silica binder.

8.  The method of claim 7, wherein the precursor foamed colloidal silica binder and the second quantity of the aqueous foamed colloidal silica binder are added separately to the solid refractory component and mixed together with the solid refractory component.

9.  The method of nay of claims 1 to 5, wherein the foamed colloidal silica binder is formed by adding the synthetic non-protein foaming agent to water to form foamed water and adding and mixing the foamed water to the aqueous colloidal silica binder to form the foamed colloidal silica binder.

10. The method of claim any of claims 1 to 9, wherein the porous refractory composition has a total porosity of 25% to 75% by volume, preferably 40% to 65% by volume.

11. A method of making a porous refractory article, comprising the steps of

    providing a porous refractory composition of any of claims 1 to 10;
    casting the porous refractory composition to a mold or substrate; and
    drying the porous refractory composition to form the porous refractory article;
    wherein the porous refractory article has a total porosity of 25% to 75% by volume, preferably 40% to 65% by volume.

12. The method of claim any of claims 1 to 11, wherein the solid refractory component comprises:

     50% to 92% by weight chamotte;
     5% to 25% by weight mullite; and
     3% to 20% by weight fused silica.

13. The method of claim 12, wherein the chamotte comprises 35% to 65% by weight of a first chamotte component having screen mesh particle sizes ranging from 2380 to 6730 microns, 10% to 35% by weight of a second chamotte component having screen mesh particle sizes ranging from 841 to less than 2380 microns, and 15% to 45% by weight of a third chamotte component having screen mesh particle sizes less than 841 microns.

14. The method of any of claims 1 to 11, wherein the solid refractory component comprises:

     20% to 40% by weight calcine grog;
     25% to 45% by weight mullite; and
     20% to 40% by weight alumina.

15. The method of claim any of claims 1 to 11, wherein the solid refractory component comprises:

     55% to 94% by weight calcine grog;
     5% to 35% by combined weight of kyanite, fused silica, tabular alumina, white fused alumina, calcined alumina, zircon flour, mullite, silicon carbide, or a combination thereof; and
     optionally, 1% to 8% by weight fumed silica, microsilica, and/or aluminum fluoride.

16. The method of any of claims 1 to 11, wherein the solid refractory component comprises:

     14% to 80% by weight bauxite; and
     15% to 80% by weight alumina; and
     optionally, 5% to 30% by weight calcine grog and/or mullite, 2% to 25% by weight silicon carbide, 2% to 8% by weight aluminum fluoride, 1% to 5% by weight fumed silica, and/or 1% to 5% by weight microsilica.

17. The method of claim any of claims 1 to 11, wherein the solid refractory component comprises:

     55% to 80% by weight calcined flint clay;
     5% to 38% by weight kyanite and/or mullite; and
     4% to 15% by weight calcined alumina.

18. The method of claim any of claims 1 to 11, wherein the solid refractory component comprises:

     20% to 95% by weight tabular alumina;
     2% to 10% by weight reactive alumina and/or
     3% to 15% by weight calcined alumina; and
     optionally, 5% to 45% by weight zircon flour, 5% to 35% by weight zircon sand, 5% to 30% by weight fused mullite, 5% to 35% by weight calcine grog, 5% to 25% by weight bubble alumina, 5% to 25% by weight bauxite, 5% to 20% by weight silicon carbide, 2% to 10% by weight white fused alumina, and/or 2% to 8% by weight aluminum fluoride.

19. The method of any of claims 1 to 11, wherein the solid refractory com[ponent comprises:

     55% to 92% by weight zirconia;
     2% to 10% by reactive alumina and/or 2% to 10% by weight calcined alumina; and
     optionally 5% to 25% by weight mullite and/or 1% to 5% by weight fumed silica.

20. The method of any of claims 1 to 11, wherein the solid refractory component comprises:

     55% to 97% by weight fused silica;
     zero to 30% by weight silicon carbide; and
     optionally, 1% to 10% by weight fumed silica and/or 1% to 10% by weight microsilica.

21. The method of any of claims 1 to 11, wherein the solid refractory component comprises:

50% to 90% by weight crushed glass;
15% to 40% by weight fused silica; and
optionally, 5% to 20% by weight refractory sand and 1% to 10% by weight fused silica.

22. The method of any of claims 1 to 11, wherein the solid refractory component comprises:

55% to 85% by weight brown fused alumina;
1.5% to 10% by weight reactive alumina;
5% to 25% by weight silicon carbide; and
optionally, 1% to 5% by weight of aluminum powder, 1% to 5% by weight fumed silica, and/or 1% to 5% by weight microsilica.

23. The method of any of claims 1 to 11, wherein the solid refractory component comprises:

80% to 99% by weight quartz; and
1% to 15% by combined weight of fumed silica and/or microsilica.

FIG. 1

FIG. 2

FIG. 3

FIG. 4

01mm

1mm

FIG. 5

FIG. 6

FIG. 7

FIG. 8

FIG. 9

FIG. 10

FIG. 11

FIG. 12

FIG. 13

140

150

140

FIG. 14

150

FIG. 15

150

FIG. 16

Europäisches
Patentamt

European
Patent Office

Office européen
des brevets

## EUROPEAN SEARCH REPORT

Application Number

EP 24 20 9683

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 944 888 A (PERICH REGIS M [US] ET AL) 31 August 1999 (1999-08-31) | 2,3 | INV.<br>C04B35/66 |
| A | * column 3, lines 31-33; claims 1-20; example 1 * | 1,4-23 | C04B38/02<br>C04B38/10 |
| | ----- | | C04B28/24 |
| X | US 4 307 197 A (DANIEL JOHN G ET AL) 22 December 1981 (1981-12-22) | 2,3 | B01J13/00 |
| A | * column 4, lines 3-9; claims 1-9; examples 1, 2 * | 1,4-23 | |
| | ----- | | |
| A | EP 0 677 495 B1 (MAGNECO METREL INC [US]) 4 June 2003 (2003-06-04)<br>* paragraphs [0015] - [0017], [0031] -<br>[0036]; claims 1-21; examples 1-3 * | 1-23 | |
| | ----- | | |
| A | EP 4 194 424 A1 (IMERTECH SAS [FR]) 14 June 2023 (2023-06-14)<br>* claims 1-15 * | 1-23 | |
| | ----- | | |
| A | EP 3 375 766 A1 (MAGNECO/METREL INC [US]) 19 September 2018 (2018-09-19)<br>* claims 1-18 * | 1-23 | TECHNICAL FIELDS SEARCHED (IPC) |
| | ----- | | C04B |
| A,D | US 9 994 486 B1 (ANDERSON MICHAEL W [US] ET AL) 12 June 2018 (2018-06-12)<br>* claim 1 * | 1-23 | B01J |
| | ----- | | |
| A,D | US 10 494 305 B2 (MAGNECO/METREL INC [US]) 3 December 2019 (2019-12-03)<br>* claim 11 * | 1-23 | |
| | ----- | | |

The present search report has been drawn up for all claims

| Place of search | Date of completion of the search | Examiner |
|---|---|---|
| The Hague | 17 April 2025 | Süzük, Kerem Güney |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ........................................................................
& : member of the same patent family, corresponding
    document

EPO FORM 1503 03.82 (P04C01)

# EP 4 570 777 A1

## ANNEX TO THE EUROPEAN SEARCH REPORT
## ON EUROPEAN PATENT APPLICATION NO.

EP 24 20 9683

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2025

| Patent document cited in search report | | Publication date | Patent family member(s) | | Publication date |
|---|---|---|---|---|---|
| US 5944888 | A | 31-08-1999 | US | 5766686 A | 16-06-1998 |
| | | | US | 5944888 A | 31-08-1999 |
| US 4307197 | A | 22-12-1981 | NONE | | |
| EP 0677495 | B1 | 04-06-2003 | AT | E242186 T1 | 15-06-2003 |
| | | | CA | 2145563 A1 | 16-10-1995 |
| | | | DE | 69530956 T2 | 13-05-2004 |
| | | | EP | 0677495 A2 | 18-10-1995 |
| | | | ES | 2197180 T3 | 01-01-2004 |
| | | | US | 5422323 A | 06-06-1995 |
| EP 4194424 | A1 | 14-06-2023 | EP | 4194424 A1 | 14-06-2023 |
| | | | EP | 4444670 A1 | 16-10-2024 |
| | | | JP | 2024546775 A | 26-12-2024 |
| | | | US | 2025051239 A1 | 13-02-2025 |
| | | | WO | 2023105043 A1 | 15-06-2023 |
| EP 3375766 | A1 | 19-09-2018 | CA | 2994439 A1 | 16-09-2018 |
| | | | EP | 3375766 A1 | 19-09-2018 |
| | | | ES | 2757573 T3 | 29-04-2020 |
| | | | MX | 380537 B | 12-03-2025 |
| | | | PL | 3375766 T3 | 18-05-2020 |
| US 9994486 | B1 | 12-06-2018 | NONE | | |
| US 10494305 | B2 | 03-12-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9994486 B, Anderson
- US 10429130 B, Boring
- US 10494305 B, Anderson